# EUROPEAN PATENT APPLICATION

(11) **EP 4 354 553 A1**
(43) Date of publication of application: **17.04.2024**
(21) Application number: 22931429.9
(22) Date of filing: 18.03.2022
(51) Int. Cl.: H01M 4/62, C01B 32/158, H01M 10/0525

(54) **CARBON NANOTUBE, PREPARATION METHOD THEREFOR AND USE THEREOF, SECONDARY BATTERY, BATTERY MODULE, BATTERY PACK AND ELECTRIC DEVICE**

(71) Applicant: Contemporary Amperex Technology Co., Limited, Ningde City, Fujian 352100 (CN)
(72) Inventor: WU, Yale, Ningde City, Fujian 352100 (CN); ZHANG, Ming, Ningde City, Fujian 352100 (CN); YANG, Jimin, Ningde City, Fujian 352100 (CN)
(74) Representative: Gong, Jinping
(86) International application number: PCT/CN2022/081633
(87) International publication number: WO 2023/173395

(57) **Abstract**

A carbon nanotube, a preparation method and use of same, a secondary battery, a battery module, a battery pack, and an electrical device are disclosed. The carbon nanotube assumes a mace structure formed of a skeleton carbon nanotube and a branched carbon nanotube, where a weight percent of the branched carbon nanotube is 70 wt% to 90 wt% based on a total weight of the carbon nanotube. The carbon nanotube is so dispersible that the carbon nanotube can be added as a conductive agent directly into a preparation system of a negative electrode plate of the secondary battery without a need for any other dispersants. In addition, the carbon nanotube is ensured to be highly conductive, thereby ensuring a high conductivity of the negative electrode plate in the secondary battery.

## Description

### TECHNICAL FIELD

This application relates to the technical field of lithium batteries, and in particular, to a carbon nanotube, a preparation method of the carbon nanotube, a use of the carbon nanotube as a conductive agent in a negative electrode plate of a secondary battery, a secondary battery, a battery module, a battery pack, and an electrical device.

### BACKGROUND

In recent years, lithium-ion batteries have been applied more extensively in many fields, including energy storage power systems such as hydro, thermal, wind, and solar power stations, and other fields such as electric tools, electric bicycles, electric motorcycles, and electric vehicles, military equipment, and aerospace. The enormous development of the lithium-ion batteries is imposing higher requirements on conductivity of a negative electrode plate in a secondary battery, cycle performance of the secondary battery, and the like. Carbon nanotubes exhibit excellent electrical conductivity when serving as a conductive agent in the negative electrode plate. The carbon nanotubes can effectively form a long-range conductive network in an electrode material of a lithium-ion battery, alleviate polarization of electrons, and impart excellent performance to the lithium-ion battery.

However, the carbon nanotubes are extremely difficult to disperse. In the prior art, the carbon nanotubes are dispersed just in a solvent to form a slurry for use in preparing the negative electrode plate of the lithium-ion battery. The content of the carbon nanotubes in the conductive slurry produced in such a way is relatively low, and the content of the solvent is relatively high. Consequently, a manufacturer of the lithium-ion batteries incurs a high transportation cost, the conductive slurry is prone to sedimentation and failure, the required temporary storage space is large, and a series of other problems occur, thereby restricting the use of the carbon nanotubes in a wider range and more fields.

### SUMMARY

This application is made in view of the above problems, and an objective of this application is to provide a highly dispersible carbon nanotube and a preparation method thereof. The carbon nanotube is so dispersible that the carbon nanotube can be added directly into a preparation system of a negative electrode plate of a lithium battery without a need for any other dispersants. In addition, the carbon nanotube is ensured to be highly conductive, thereby ensuring a high conductivity of the negative electrode plate in the secondary battery.

A first aspect of this application provides a carbon nanotube. The carbon nanotube assumes a mace structure formed of a skeleton carbon nanotube and a branched carbon nanotube. A weight percent of the branched carbon nanotube is 70 wt% to 90 wt% based on a total weight of the carbon nanotube.

In this way, the carbon nanotube according to this application achieves higher dispersibility by containing a branched carbon nanotube at a specified weight percent, and solves a series of problems related to storage, sedimentation, space occupation, transportation, and the like caused by preparation of a slurry from the powdered carbon nanotubes in the prior art. In addition, the carbon nanotube is ensured to be highly conductive, thereby ensuring a high conductivity of the negative electrode plate in the secondary battery.

In any embodiment, a surface of the carbon nanotube includes a hydrophilic functional group, and the hydrophilic functional group is preferably a hydroxyl functional group, a carboxyl functional group, or an epoxy functional group. In this way, the dispersibility of the carbon nanotube in a negative slurry is improved, and in turn, the conductivity of the negative electrode plate of the secondary battery is improved.

In any embodiment, a specific surface area of the carbon nanotube is 230 to 400 m²/g, and a diameter of the skeleton carbon nanotube is greater than or equal to a diameter of the branched carbon nanotube. In this way, the dispersibility of the carbon nanotube in a negative slurry is improved, and in turn, the conductivity of the negative electrode plate of the secondary battery is improved.

A second aspect of the present invention provides a preparation method of the carbon nanotube disclosed in the first aspect of the present invention. The method includes:
1) adding the skeleton carbon nanotube into a mixed solution of a transition metal salt and an acid, mixing the solution well, and then drying the solution to obtain a modified skeleton carbon nanotube powder; and
2) putting the modified skeleton carbon nanotube powder into a muffle oven, and passing a gaseous carbon source into the muffle oven in a reductive atmosphere and an inert atmosphere to calcine the powder, and then cooling down to obtain the carbon nanotube according to the first aspect of the present invention.

In this way, this application etches the skeleton carbon nanotube by using an acid, and then grows branched carbon nanotubes on the skeleton carbon nanotube, so as to obtain the highly dispersible mace-shaped carbon nanotube according to the present invention.

In any embodiment, in step 1), the transition metal salt is one or more selected from a nitrate, a sulfate, or a hydrochloride of iron, cobalt, and nickel, and is preferably a nitrate of iron, cobalt, and nickel; the acid is one or more selected from a sulfuric acid, a nitric acid, a hydrochloric acid, a hydrofluoric acid, an oxalic acid, a perchloric acid, a hydrobromic acid, or a hydroiodic acid; a molar ratio between the transition metal salt and the acid is (2 to 15): 1; and a weight ratio between the skeleton carbon nanotube and the acid is (10 to 30): 1. In this way, by setting the molar ratio between the skeleton carbon nanotube, the transition metal salt, and the acid to a specified value, the skeleton carbon nanotube can be better etched, and a hydrophilic group can be bonded onto the skeleton carbon nanotube. In addition, the transition metal salt can be loaded onto the surface of the etched skeleton carbon nanotube as a catalyst precursor for growing the branched carbon nanotube in step 2).

In any embodiment, in step 2), the calcination is performed at a temperature of 700 °C to 1200 °C for 10 to 100 minutes. In this way, the branched carbon nanotube is grown on the surface of the etched skeleton carbon nanotube, so as to obtain the highly dispersible carbon nanotube according to the present invention.

A third aspect of this application provides a use of the carbon nanotube according to the first aspect of this application as a conductive agent in a negative electrode plate of a secondary battery.

A fourth aspect of this application provides a secondary battery. The secondary battery includes: a positive electrode plate that contains a positive current collector and a positive film layer disposed on at least one surface of the positive current collector; a negative electrode plate that contains a negative current collector and a negative film layer disposed on at least one surface of the negative current collector; and an electrolytic solution. The negative film layer includes the carbon nanotube according to the first aspect of this application or a carbon nanotube prepared by the method according to the second aspect of this application.

A fifth aspect of this application provides a battery module. The battery module includes the secondary battery according to the fourth aspect of this application.

A sixth aspect of this application provides a battery pack. The battery pack includes the battery module according to the fifth aspect of this application.

A seventh aspect of this application provides an electrical device. The electrical device includes at least one of the secondary battery according to the fourth aspect of this application, the battery module according to the fifth aspect of this application, or the battery pack according to the sixth aspect of this application.

The carbon nanotube according to the present invention is formed of a skeleton carbon nanotube and a branched carbon nanotube, and includes a mace-shaped branch structure, thereby improving the dispersibility and electrical conductivity, and in turn, ensuring that the negative electrode plate containing the carbon nanotubes according to the present invention in the secondary battery is highly conductive. Moreover, due to high dispersibility, the carbon nanotube according to the present invention solves a series of problems related to storage, sedimentation, space occupation, transportation, and the like caused by the preparation of the slurry from the powdered carbon nanotubes in the prior art.

### BRIEF DESCRIPTION OF DRAWINGS

FIG. 1 is a schematic diagram of a secondary battery according to an embodiment of this application;
FIG. 2 is an exploded view of a secondary battery shown in FIG. 1 according to an embodiment of this application;
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

### List of reference numerals:

1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following describes and discloses in detail a carbon nanotube, a use of the carbon nanotube, a preparation method of the carbon nanotube, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

Carbon nanotubes exhibit excellent electrical conductivity when serving as a conductive agent in the negative electrode plate. The carbon nanotubes can effectively form a long-range conductive network in an electrode material of a lithium-ion battery, alleviate polarization of electrons, and impart excellent performance to the lithium-ion battery. However, the carbon nanotubes are extremely difficult to disperse. In the prior art, the carbon nanotubes are dispersed just in a solvent to form a slurry for use in preparing the negative electrode plate of the lithium-ion battery. The content of the carbon nanotubes in the conductive slurry produced in such a way is relatively low, and the content of the solvent is relatively high. Consequently, a manufacturer of the lithium-ion batteries incurs a high transportation cost, the conductive slurry is prone to sedimentation and failure, the required temporary storage space is large, and a series of other problems occur, thereby restricting the use of the carbon nanotubes in a wider range and more fields. An objective of this application is to provide a carbon nanotube according to the first aspect of this application. The carbon nanotube is so highly dispersible that the carbon nanotube can be added directly into a preparation system of a negative electrode plate of a lithium battery without a need for any other dispersants. In addition, this application ensures the carbon nanotube to be highly conductive, thereby ensuring a high conductivity of the negative electrode plate in the secondary battery.

### Carbon nanotubes

In an embodiment of this application, this application discloses a carbon nanotube. The carbon nanotube assumes a mace structure formed of a skeleton carbon nanotube and a branched carbon nanotube. A weight percent of the branched carbon nanotube is 70 wt% to 90 wt% based on a total weight of the carbon nanotube.

Although the underlying mechanism still remains unclear, the applicant hereof unexpectedly finds that, the carbon nanotube according to this application achieves higher dispersibility by containing a branched carbon nanotube at a specified weight percent, and solves a series of problems related to storage, sedimentation, space occupation, transportation, and the like caused by preparation of a slurry from the powdered carbon nanotubes in the prior art. In addition, the carbon nanotube is ensured to be highly conductive, thereby ensuring a high conductivity of the negative electrode plate in the secondary battery.

In some embodiments, a surface of the carbon nanotube includes a hydrophilic functional group, and the hydrophilic functional group is preferably a hydroxyl functional group, a carboxyl functional group, or an epoxy functional group. In this way, the dispersibility of the carbon nanotube in a negative slurry is improved, and in turn, the conductivity of the negative electrode plate of the secondary battery is improved.

In some embodiments, a specific surface area of the carbon nanotube is 230 to 400 m²/g, and optionally 230 to 310 m²/g. A diameter of the skeleton carbon nanotube is greater than or equal to a diameter of the branched carbon nanotube. In this way, the dispersibility of the carbon nanotube in a negative slurry is improved, and in turn, the conductivity of the negative electrode plate of the secondary battery is improved.

In some embodiments, a diameter of the skeleton carbon nanotube is 10 to 50 nm, and preferably 10 to 30 nm; the length of the skeleton carbon nanotube is 1 to 30 µm, and preferably 5 to 20 µm; the diameter of the branched carbon nanotube is 3 to 15 nm, and preferably 5 to 10 nm; and the length of the branched carbon nanotube is 0.5 to 20 µm, and preferably 1 to 10 µm.

A second aspect of the present invention provides a preparation method of the carbon nanotube disclosed in the first aspect of the present invention. The method includes:
1) adding the skeleton carbon nanotube into a mixed solution of a transition metal salt and an acid, mixing the solution well, and then drying the solution to obtain a modified skeleton carbon nanotube powder; and
2) putting the modified skeleton carbon nanotube powder into a muffle oven, and passing a gaseous carbon source into the muffle oven in a reductive atmosphere and an inert atmosphere to calcine the powder, and then cooling down to obtain the carbon nanotube according to the first aspect of the present invention.

In this way, this application etches the skeleton carbon nanotube by using an acid, and then grows branched carbon nanotubes on the skeleton carbon nanotube, so as to obtain the highly dispersible mace-shaped carbon nanotube according to the present invention. Moreover, the added acid not only etches the skeleton carbon nanotube, but also implements bonding of a hydrophilic group such as a hydroxyl functional group, a carboxyl functional group, or an epoxy functional group onto the skeleton carbon nanotube. Such functional groups are polar functional groups, and make the carbon nanotube easy to disperse. The transition metal salt is loaded onto the surface of etched carbon nanotube as a catalyst precursor for growing the branched carbon nanotube.

In some embodiments, in step 1), the transition metal salt is one or more selected from a nitrate, a sulfate, or a hydrochloride of iron, cobalt, and nickel, and is preferably a nitrate of iron, cobalt, and nickel; the acid is one or more selected from a sulfuric acid, a nitric acid, a hydrochloric acid, a hydrofluoric acid, an oxalic acid, a perchloric acid, a hydrobromic acid, or a hydroiodic acid; a molar ratio between the transition metal salt and the acid is (2 to 15): 1, and preferably (6 to 12.5): 1; and a weight ratio between the skeleton carbon nanotube and the acid is (10 to 30): 1, and preferably (13 to 27.5): 1. In this way, by setting the molar ratio between the skeleton carbon nanotube, the transition metal salt, and the acid to a specified value, the skeleton carbon nanotube can be better etched, and a hydrophilic group can be bonded onto the skeleton carbon nanotube. In addition, the transition metal salt can be loaded onto the surface of the etched skeleton carbon nanotube as a catalyst precursor for growing the branched carbon nanotube in step 2).

In some embodiments, in step 1), the drying may be one or more of: low-temperature freeze drying, spray drying, fluidized bed drying, or vacuum drying.

In some embodiments, in step 2), the calcination is performed at a temperature of 700 °C to 1200 °C for 10 to 100 minutes. In this way, the branched carbon nanotube is grown on the surface of the etched skeleton carbon nanotube, so as to obtain the highly dispersible carbon nanotube according to the present invention.

In some embodiments, in step 2), the reductive atmosphere is hydrogen; the inert atmosphere is one or more of nitrogen or argon; and the gaseous carbon source is one or more of methane or acetylene.

In some embodiments, in step 2), the muffle oven may be a tube reaction furnace or the like.

A third aspect of this application provides a use of the carbon nanotube according to the first aspect of this application as a conductive agent in a negative electrode plate of a secondary battery.

A fourth aspect of this application provides a secondary battery. The secondary battery includes: a positive electrode plate that contains a positive current collector and a positive film layer disposed on at least one surface of the positive current collector; a negative electrode plate that contains a negative current collector and a negative film layer disposed on at least one surface of the negative current collector; and an electrolytic solution. The negative film layer includes the carbon nanotube according to the first aspect of this application or a carbon nanotube prepared by the method according to the second aspect of this application.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive film layer that overlays at least one surface of the positive current collector. The positive film layer includes a positive active material according to the first aspect of this application.

As an example, the positive current collector includes two surfaces opposite to each other in a thickness direction of the positive current collector. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}CO_{1/3}Mn_{1/3}O₂ (briefly referred to as NCM333), LiNi_{0.5}Co_{0.02}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.005}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive slurry, coating a positive current collector with the positive slurry, and performing steps such as drying and cold calendering to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be used in combination.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be the carbon nanotube according to the first aspect of this application or a carbon nanotube prepared by the method according to the second aspect of this application.

In some embodiments, the conductive agent may be at least one selected from superconductive carbon, acetylene black, carbon black, Ketjen black, carbon dots, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold calendering to obtain the negative electrode plate.

### [Electrolyte]

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

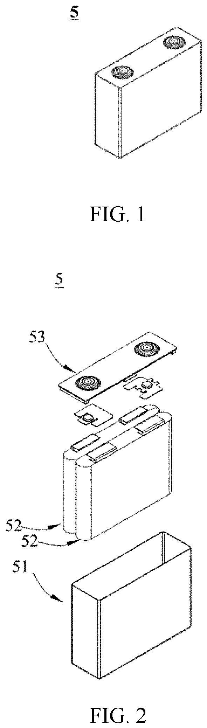

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

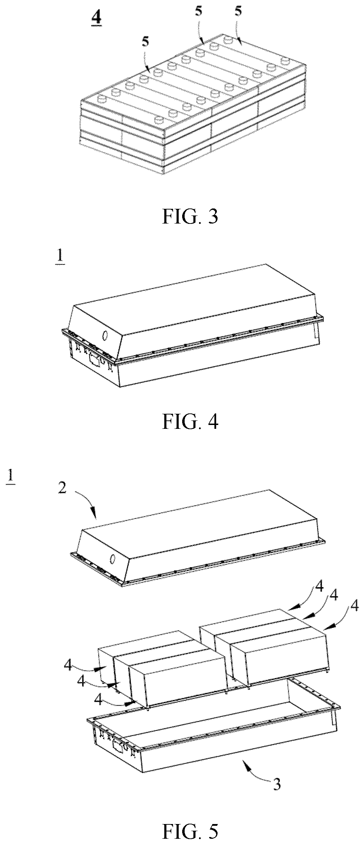

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

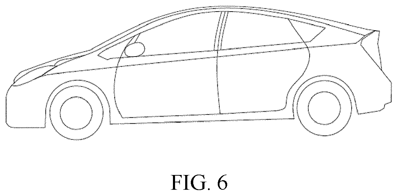

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

1) Adding 1 gram of skeleton multi-walled carbon nanotubes, 3 grams of Fe(NO₃)₃, and 0.5 mL of hydrochloric acid into 50 grams of water in a mixing tank equipped with a piece of mixing equipment, so as to form a water solution, in which the skeleton multi-walled carbon nanotubes each possess a diameter of 10 nm and a specific surface area of 150 m²/g, and the concentration of the hydrochloric acid is 2 mol/L. Stirring the water solution well at a speed of 400 rpm for 30 minutes, and then putting the water solution into a spray dryer (model: LPG-5-N, manufacturer: Wuxi Zhuoling Drying Equipment Co., Ltd.) to undergo spray drying at a temperature of 180 °C, so as to obtain modified skeleton carbon nanotube powder.
2) Putting the modified skeleton carbon nanotube powder into a tube furnace with a tube diameter of 10 cm. Passing methane into the tube furnace in a hydrogen atmosphere and a nitrogen atmosphere to calcine the powder at a temperature of 900 °C for 40 minutes, and then naturally cooling down to a room temperature to obtain the carbon nanotubes according to the present invention.

In a carbon nanotube according to the present invention, the branched carbon nanotubes account for a weight percent of 80% and possess a diameter of 5 nm.

The specific surface area of the carbon nanotube according to the present invention is 280 m²/g.

The test results of parameters are set out in Table 1.

### Embodiments 2 to 14

The steps are identical to those in Embodiment 1 except the type and dosage of the transition metal salt and the acid, the drying mode, the type of the carbon source, and the calcination temperature.

### Comparative Embodiment 1

The steps are identical to those in Embodiment 1 except that the dosage of the hydrochloric acid is 0.1 g, significantly lower than the dosage applied in an embodiment of the present invention.

The test results of parameters are set out in Table 1.

**Table 1: Test conditions and test results of relevant performance parameters of Embodiments 1 to 10**

| Embodiment | Transition metal salt | | Acid | | Drying mode | Carbon source | Calcination | | Branched carbon nanotube | | Carbon nanotube hereof |
|---|---|---|---|---|---|---|---|---|---|---|---|
| | Type | Dosage (g) | Type | Dosage (ml) | | | Temperature (°C) | Time (min) | Content (%) | Diameter (nm) | Specific surface area (m²/g) |
| 1 | Fe(NO₃)₃ | 3 | HCl | 0.5 | Spray drying | Methane | 900 | 40 | 80 | 5 | 280 |
| 2 | Fe(NO₃)₃ | 5 | HCl | 0.5 | Spray drying | Methane | 900 | 40 | 85 | 5 | 300 |
| 3 | Fe(NO₃)₃ | 7 | HCl | 0.5 | Spray drying | Methane | 900 | 40 | 86 | 5 | 305 |
| 4 | Co(NO₃)₂ | 3 | HCl | 0.5 | Spray drying | Methane | 900 | 40 | 75 | 8 | 260 |
| 5 | Ni(NO₃)₂ | 3 | HCl | 0.5 | Spray drying | Methane | 900 | 40 | 78 | 8 | 265 |
| 6 | Fe(NO₃)₃ | 3 | HCl | 0.8 | Spray drying | Methane | 900 | 40 | 88 | 5 | 285 |
| 7 | Fe(NO₃)₃ | 3 | HCl | 1 | Spray drying | Methane | 900 | 40 | 90 | 5 | 290 |
| 8 | Fe(NO₃)₃ | 3 | H₂SO₄ | 0.5 | Spray drying | Methane | 900 | 40 | 79 | 4 | 274 |
| 9 | Fe(NO₃)₃ | 3 | HCl | 0.5 | Freeze-drying | Methane | 900 | 40 | 82 | 5 | 286 |
| 10 | Fe(NO₃)₃ | 3 | HCl | 0.5 | Spray drying | Acetylene | 900 | 40 | 84 | 6 | 278 |
| 11 | Fe(NO₃)₃ | 3 | HCl | 0.5 | Spray drying | Methane | 700 | 40 | 70 | 5 | 230 |
| 12 | Fe(NO₃)₃ | 3 | HCl | 0.5 | Spray drying | Methane | 1100 | 40 | 87 | 5 | 300 |
| 13 | Fe(NO₃)₃ | 3 | HCl | 0.5 | Spray drying | Methane | 900 | 30 | 77 | 5 | 267 |
| 14 | Fe(NO₃)₃ | 3 | HCl | 0.5 | Spray drying | Methane | 900 | 50 | 86 | 5 | 296 |
| Comparative Embodiment 1 | Fe(NO₃)₃ | 3 | HCl | 0.1 | Spray drying | Methane | 900 | 40 | 65 | 4 | 200 |

### Performance Test

Performing the following performance test steps in which the conductive agent is the carbon nanotubes and skeleton carbon nanotubes obtained in Embodiments 1 to 14 and Comparative Embodiment 1. The test results are shown in Table 2 below.

### (1) Preparing a negative electrode plate

1) Dry-mixing 97 grams of graphite, 1 gram of CMC, and 0.5 gram of carbon nanotube powder as ingredients.
2) Adding deionized water into the well-mixed ingredients, and blending the solution to form a slurry in which the solid content is 60%. Kneading the slurry until a homogeneous state, and then adding deionized water and stirring well to form a slurry solution in which the solid content is 54%. Finally, adding 1.5 grams of SBR emulsion into the slurry, and stirring well.
3) Coating a copper foil with the slurry, putting the coated foil into an oven to bake at 100 °C for 1 hour.
4) Calendering the resultant foil in step 3) in a 5-ton calendering machine to obtain a negative electrode plate.

### (2) Testing the film resistance of the negative electrode plate

1) Turning on the resistance tester, opening the protective door of the tester, putting the cut-out electrode specimen onto a specimen holder, and closing the protective door.
2) Pressing the control button so that the terminal is pressed down to start the test.
3) Recording the reading of resistance when the Ω symbol appears at the position of the reading. At this time, the reading stops changing, indicating that the test is completed.

Extremum difference of the film resistance of the negative electrode plate: Measuring the film resistance of at difference places of the negative electrode plate to obtain 10 resistance values, and calculating a difference between the maximum value and the minimum value to represent the dispersion performance of the carbon nanotube.

Film resistance of the negative electrode plate: Calculating the average value of the 10 measured resistance values of the negative electrode plate to represent the conductivity of the carbon nanotube.

**Table 2 Performance test results of skeleton carbon nanotubes of Embodiments 1 to 14 and Comparative Embodiment 1**

| Embodiment | Extremum difference of film resistance of negative electrode plate (mΩ) | Average film resistance of negative electrode plate (mΩ) |
|---|---|---|
| Embodiment 1 | 5 | 26 |
| Embodiment 2 | 4 | 24 |
| Embodiment 3 | 6 | 23 |
| Embodiment 4 | 3 | 28 |
| Embodiment 5 | 5 | 30 |
| Embodiment 6 | 2 | 25 |
| Embodiment 7 | 4 | 24 |
| Embodiment 8 | 6 | 31 |
| Embodiment 9 | 3 | 23 |
| Embodiment 10 | 7 | 27 |
| Embodiment 11 | 2 | 28 |
| Embodiment 12 | 4 | 23 |
| Embodiment 13 | 6 | 28 |
| Embodiment 14 | 3 | 25 |
| Comparative Embodiment 1 | 25 | 58 |
| Skeleton carbon nanotube | 3 | 21 |

As can be seen from the test results above, the carbon nanotubes obtained in Embodiments 1 to 14 are effectively improved in both dispersibility and conductivity when serving as a conductive agent in the negative electrode plate.

By contrast, the carbon nanotube and skeleton carbon nanotube obtained in Comparative Embodiment 1 are not effectively improved in conductivity or dispersibility when serving as a conductive agent in the negative electrode plate.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A carbon nanotube, **characterized in that** the carbon nanotube assumes a mace structure formed of a skeleton carbon nanotube and a branched carbon nanotube, wherein a weight percent of the branched carbon nanotube is 70 wt% to 90 wt% based on a total weight of the carbon nanotube.

2. The carbon nanotube according to claim 1, **characterized in that** a surface of the carbon nanotube comprises a hydrophilic functional group, and the hydrophilic functional group is preferably a hydroxyl functional group, a carboxyl functional group, or an epoxy functional group.

3. The carbon nanotube according to claim 1 or 2, **characterized in that** a specific surface area of the carbon nanotube is 230 to 400 m²/g, and a diameter of the skeleton carbon nanotube is greater than or equal to a diameter of the branched carbon nanotube.

4. A method for preparing the carbon nanotube according to any one of claims 1 to 3, comprising:
1) adding the skeleton carbon nanotube into a mixed solution of a transition metal salt and an acid, mixing the solution well, and then drying the solution to obtain a modified skeleton carbon nanotube powder; and
2) putting the modified skeleton carbon nanotube powder into a muffle oven, and passing a gaseous carbon source into the muffle oven in a reductive atmosphere and an inert atmosphere to calcine the powder, and then cooling down to obtain the carbon nanotube according to any one of claims 1 to 3.

5. The method according to claim 4, **characterized in that**, in step 1), the transition metal salt is one or more selected from a nitrate, a sulfate, or a hydrochloride of iron, cobalt, and nickel, and is preferably a nitrate of iron, cobalt, and nickel; the acid is one or more selected from a sulfuric acid, a nitric acid, a hydrochloric acid, a hydrofluoric acid, an oxalic acid, a perchloric acid, a hydrobromic acid, or a hydroiodic acid; a molar ratio between the transition metal salt and the acid is (2 to 15): 1; and a weight ratio between the skeleton carbon nanotube and the acid is (10 to 30): 1.

6. The method according to claim 4 or 5, **characterized in that**, in step 2), the calcination is performed at a temperature of 700 °C to 1200 °C for 10 to 100 minutes.

7. A use of the carbon nanotube according to any one of claims 1 to 3 as a conductive agent in a negative electrode plate of a secondary battery.

8. A secondary battery, comprising: a positive electrode plate that contains a positive current collector and a positive film layer disposed on at least one surface of the positive current collector; a negative electrode plate that contains a negative current collector and a negative film layer disposed on at least one surface of the negative current collector; and an electrolytic solution, **characterized in that** the negative film layer comprises the carbon nanotube according to any one of claims 1 to 4 or a carbon nanotube prepared by the method according to any one of claims 4 to 6.

9. A battery module, **characterized in that** the battery module comprises the secondary battery according to claim 8.

10. A battery pack, **characterized in that** the battery pack comprises the battery module according to claim 9.

11. An electrical device, **characterized in that** the electrical device comprises at least one of the secondary battery according to claim 8, the battery module according to claim 9, or the battery pack according to claim 10.
